# FASCICULE DE BREVET EUROPEEN

(11) **EP 4 124 518 B1**
(45) Date de publication et mention de la délivrance du brevet: **02.12.2026**
(21) Numéro de dépôt: 22187091.8
(22) Date de dépôt: 26.07.2022
(51) Int. Cl.: B60S 1/40

(54) **DISPOSITIF DE CONNEXION ENTRE BALAI D' ESSUYAGE ET BRAS D' ENTRAÎNEMENT**
VERBINDUNGSVORRICHTUNG ZWISCHEN WISCHBLATT UND ANTRIEBSARM
CONNECTION DEVICE BETWEEN A WIPER BLADE AND A DRIVE ARM

(30) Priorité: 30.07.2021 FR 2108305
(43) Date de publication de la demande: 01.02.2023
(73) Titulaire: Valeo Systèmes d'Essuyage, 93012 Bobigny (FR)
(72) Inventeur: GAUCHER, Vincent, 78322 LE MESNIL SAINT DENIS (FR); POTON, Eric, 78322 LE MESNIL SAINT DENIS (FR); HOUSSAT, Stephane, 78322 LE MESNIL SAINT DENIS (FR)
(74) Mandataire: Valeo Visibility

(56) Documents cités:
- CN-B- 103 303 261
- CN-B- 105 984 435
- DE-A1- 102010 003 269
- DE-U1- 202014 102 928
- US-A1- 2012 060 316
- US-B1- 8 707 506

## Description

La présente invention concerne le domaine des essuie-glaces pour véhicule, et plus particulièrement les dispositifs de connexion permettant de connecter un balai d'essuyage à un bras d'entraînement.

Les systèmes d'essuyage pour véhicule sont conçus pour retirer, par balayage, les liquides et salissures qui pourraient perturber la vision d'un conducteur. Ces systèmes d'essuyage comprennent en général un bras d'entraînement, qui effectue un mouvement de va-et-vient angulaire, et des balais d'essuyage allongés équipés de lames racleuses réalisées en une matière élastique. La lame racleuse frotte contre le pare-brise et évacue ces liquides et salissures en les balayant en dehors du champ de vision du conducteur.

Le balai d'essuyage est rattaché au bras d'entraînement par un dispositif de connexion qui comprend un connecteur et un adaptateur. Le connecteur est une pièce qui est solidarisée au balai d'essuyage et qui est en général solidaire de la lame racleuse. L'adaptateur est une pièce qui est interposée entre le bras d'entraînement et le connecteur, en étant conformé pour s'engager dans une pièce terminale du bras d'entraînement. Connecteur et adaptateur coopèrent ensuite pour permettre la liaison articulée et la fixation du balai d'essuyage sur le bras d'entraînement, formant ainsi le dispositif de connexion du balai d'essuyage au bras d'entraînement.

La liaison articulée entre le connecteur et l'adaptateur comprend au moins un axe transversal de pivotement du connecteur vis-à-vis de l'adaptateur, qui est également un axe de pivotement du balai d'essuyage vis-à-vis du bras d'entraînement. L'un des organes, par exemple le connecteur, comprend en général une forme sensiblement cylindrique qui forme un pivot et qui est reçu dans un logement de forme complémentaire de l'autre organe, ici l'adaptateur.

Un adaptateur permet d'associer un balai d'essuyage à un type particulier de pièce terminale ou de bras d'entraînement et il existe plusieurs variétés de pièces terminales. Ces variétés sont proches en apparence mais diffèrent les unes des autres par leurs dimensions, en particulier par leurs largeurs ou dimensions latérales. Elles varient également par les positions des orifices destinés à coopérer avec un bouton poussoir de verrouillage de l'adaptateur.

Il existe ainsi différents adaptateurs, de façon à pouvoir associer un balai d'essuyage donné à plusieurs pièces terminales et par extension à plusieurs bras d'entraînement.

Il est alors nécessaire pour l'utilisateur, amené à remplacer son balai d'essayage, de s'assurer que le montage du dispositif de connexion, avec ces différents adaptateurs, correspond bien au bras d'entraînement du véhicule sur lequel il est destiné à être monté.

Or, il peut être compliqué pour un utilisateur de comprendre comment ces adaptateurs se montent pour tel ou tel type de bras d'entrainement. Ce problème est d'autant plus prégnant quand l'utilisateur en question est un non-initié, c'est-à-dire un individu dépourvu des compétences nécessaires pour réaliser l'assemblage requis.

Par ailleurs, les différents adaptateurs proposés dans l'emballage de balais d'essuyage pour s'adapter aux différents types de bras d'entrainement existants sont encombrants et sont également trop lourds.

Le document US 8 707 506 B1 décrit un dispositif de connexion d'essuie-glace, comprenant une base et un connecteur correspondant.

La présente invention résout ces problèmes techniques en proposant un dispositif de connexion permettant à l'utilisateur de vérifier aisément que l'adaptateur monté sur le balai d'essuyage correspond bien au bras d'entraînement du véhicule destiné à recevoir ce balai d'essuyage. L'invention permet une lecture plus aisée en associant des références ou marquages individuels, plutôt qu'un code par adaptateur.

En outre, la présente invention présente des avantages liés au conditionnement des adaptateurs. Les modes de réalisation de ces adaptateurs entraînant une réduction de la matière plastique nécessaire à leur fabrication, l'encombrement ainsi que le poids de ces adaptateurs sont donc réduits.

Un objet de la présente invention est conforme à l'objet de la revendication 1.

Le dispositif de connexion comprend donc au moins un connecteur et au moins deux adaptateurs. Ce connecteur assure la liaison du dispositif de connexion au balai d'essuyage, tandis que les adaptateurs participent à relier ce connecteur à un type particulier de bras d'entraînement. Les adaptateurs peuvent relier le connecteur au type particulier de bras d'entraînement directement, ou bien faire intervenir dans cette liaison d'autres composants, par exemple un ou plusieurs adaptateurs supplémentaires.

L'adaptateur de base comprend un organe de pivotement le reliant au connecteur. Cet organe de pivotement constitue une articulation qui assure la rotation du connecteur par rapport à cet adaptateur. Lorsque le connecteur est solidaire d'un balai d'essuyage, ce balai d'essuyage peut ainsi pivoter par rapport à l'adaptateur et au bras d'entraînement auquel cet adaptateur est relié. De ce fait, le balai d'essuyage peut épouser la surface du pare-brise du véhicule qu'il équipe, afin de le balayer d'une façon satisfaisante.

Chaque adaptateur porte une référence ou marquage, qui permet à l'utilisateur d'associer visuellement un adaptateur à un type particulier de bras d'entraînement. On comprend que la lecture des références et marquages permet à l'utilisateur d'identifier chacun des adaptateurs, mais également une combinaison de ces adaptateurs. La combinaison des références et marquages donne un code qui permet d'identifier un type particulier de bras d'entraînement.

Selon une caractéristique de l'invention, le dispositif de connexion, notamment l'un et/ou l'autre des adaptateurs, comprend au moins une butée et un organe de verrouillage destinés à solidariser l'adaptateur par rapport au bras d'entraînement auquel il est destiné à s'associer. L'adaptateur et le bras d'entraînement sont ainsi solidarisés l'un à l'autre, la butée et l'organe de verrouillage empêchant la translation du bras d'entraînement par rapport à l'adaptateur. L'organe de verrouillage peut par exemple être un bouton poussoir, une languette ou encore des jambes de l'adaptateur.

Selon une caractéristique de l'invention, l'organe de verrouillage est disposé sur une paroi supérieure de l'adaptateur. L'organe de verrouillage peut ainsi être disposé sur la paroi supérieure de l'adaptateur de base ou sur la paroi supérieure de l'adaptateur complémentaire. L'organe de verrouillage est disposé sur la paroi supérieure notamment en faisant saillie de celle-ci.

Selon une autre caractéristique de l'invention, cette cavité correspond à un enfoncement d'une portion du premier adaptateur, notamment un enfoncement réalisé dans une paroi supérieure de l'adaptateur, ce dernier présentant une section en U avec la paroi supérieure interposée entre deux parois latérales. Le deuxième type de bras d'entraînement est ici un autre type de bras d'entraînement, qui est différent du premier type de bras d'entraînement auquel est associé l'adaptateur de base.

Selon une caractéristique, l'au moins un adaptateur complémentaire comprend un deuxième adaptateur qui présente au moins une excroissance, le marquage du deuxième adaptateur étant disposé sur cette excroissance, la combinaison du marquage du deuxième adaptateur avec la référence de l'adaptateur de base formant un code visuellement associé à un troisième type de bras d'entraînement. Cette excroissance correspond à une portion du deuxième adaptateur qui fait saillie depuis un corps de cet adaptateur, cette saillie s'étendant par exemple à partir de l'une des parois latérales du deuxième adaptateur. On comprend que le troisième type de bras d'entraînement est un autre type de bras d'entraînement, différent à la fois du premier type de bras d'entraînement et du deuxième type de bras d'entraînement.

Le deuxième adaptateur se distingue du premier adaptateur au moins en ce qu'il comprend une patte courbée qui se loge à l'intérieur d'une tête de l'adaptateur de base.

Selon une autre caractéristique, l'excroissance du deuxième adaptateur vient se loger dans la cavité du premier adaptateur, le marquage du deuxième adaptateur étant au moins en partie superposé sur le marquage du premier adaptateur, la combinaison du marquage du premier adaptateur, du marquage du deuxième adaptateur et de la référence de l'adaptateur de base formant un code visuellement associé à un quatrième type de bras d'entraînement. Le premier adaptateur vient se loger dans le deuxième adaptateur, qui lui est donc superposé. L'excroissance porte le marquage du deuxième adaptateur. En se logeant dans la cavité du premier adaptateur, qui elle porte le marquage de ce premier adaptateur, elle vient se superposer au moins en partie sur ce dernier. Elle le recouvre ainsi de façon que le marquage du premier adaptateur ne soit plus lisible. Une telle superposition permet de créer une nouvelle combinaison de marquages avec la référence de l'adaptateur de base, qui forme un code visuellement associé à un quatrième type de bras d'entraînement. Ce quatrième type de bras d'entraînement est structurellement différent des premier, deuxième et troisième types de bras d'entraînement.

Selon une autre caractéristique de l'invention, l'au moins un adaptateur complémentaire comprend un troisième adaptateur, ce troisième adaptateur comportant au moins un marquage, la combinaison du marquage du troisième adaptateur avec la référence de l'adaptateur de base formant un code étant destiné à associer visuellement ce troisième adaptateur à un cinquième type de bras d'entraînement. On comprend que ce cinquième type de bras d'entraînement est un autre type de bras d'entraînement, qui diffère structurellement des premier, deuxième, troisième et quatrième types de bras d'entraînement.

Selon un aspect de l'invention, au moins deux adaptateurs s'imbriquent l'un dans l'autre. Une telle imbrication se traduit par le fait que les adaptateurs, qui sont des pièces sensiblement en forme de U, peuvent s'emboîter les uns dans les autres. Un adaptateur en U peut ainsi recouvrir un autre adaptateur en U, qui peut lui-même recouvrir encore un autre adaptateur en U, notamment l'adaptateur de base. Dans un mode de réalisation, l'adaptateur de base est couvert par au moins un adaptateur complémentaire, notamment par le premier adaptateur qui lui-même peut être couvert par le deuxième adaptateur.

L'invention concerne en outre un balai d'essuyage comprenant un dispositif de connexion tel que décrit dans le présent document.

L'invention porte enfin sur un système d'essuyage comprenant un bras d'entraînement porteur d'un balai d'essuyage comprenant un dispositif de connexion, le balai d'essuyage étant relié au bras d'entraînement par l'intermédiaire du dispositif de connexion décrit ci-dessus.

D'autres caractéristiques, détails et avantages de l'invention ressortiront plus clairement à la lecture de la description qui suit d'une part, et d'un exemple de réalisation donné à titre indicatif et non limitatif en référence aux dessins annexés d'autre part, sur lesquels :
[Fig. 1] présente, schématiquement, une vue en perspective d'un système d'essuyage dans lequel un dispositif de connexion selon l'invention relie un balai d'essuyage à un bras d'entraînement ;
[Fig. 2] illustre une partie du dispositif de connexion de la figure 1 selon une vue de dessus en perspective, avec un premier adaptateur et un deuxième adaptateur ;
[Fig. 3] est une vue en perspective d'un adaptateur de base du dispositif de connexion de la figure 1 ;
[Fig. 4] est une vue en perspective du dispositif de connexion de la figure 1, désolidarisé du balai d'essuyage ;
[Fig. 5] est une autre vue en perspective du dispositif de connexion de la figure 1, solidaire d'un balai d'essuyage ;
[Fig. 6] présente différents adaptateurs pouvant être associés à un connecteur pour former un dispositif de connexion selon l'invention ;
[Fig. 7] est une vue de dessus du dispositif de connexion comprenant un deuxième adaptateur et un adaptateur de base, ainsi qu'un type particulier de bras d'entraînement ;
[Fig. 8] est une vue de dessus du dispositif de connexion comprenant un premier adaptateur et l'adaptateur de base, ainsi qu'un type particulier de bras d'entraînement ;
[Fig. 9] illustre, selon une vue de dessus, le dispositif de connexion comprenant le premier adaptateur, le deuxième adaptateur et l'adaptateur de base, ainsi qu'un type particulier de bras d'entraînement ;
[Fig. 10] illustre le dispositif de connexion en vue de dessus, ce dispositif de connexion comprenant le premier adaptateur, l'adaptateur de base et un troisième adaptateur, ainsi qu'un type particulier de bras d'entraînement.

Sur les figures, les éléments communs à plusieurs figures conservent la même référence.

Dans la description détaillée qui va suivre, les dénominations « longitudinale », « transversale » et « verticale » se réfèrent à l'orientation du dispositif de connexion selon l'invention. Une direction longitudinale correspond à une direction principale d'allongement du balai d'essuyage duquel le dispositif de connexion est rendu solidaire, cette direction longitudinale étant parallèle à un axe longitudinal L d'un repère L, V, T illustré sur les figures. Une direction transversale correspond à une direction dans laquelle s'inscrit l'axe de rotation de l'organe de pivotement entre l'adaptateur de base et le connecteur du dispositif de connexion, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

En outre, les dénominations « inférieure » et « supérieure » concernant les éléments du dispositif de connexion s'entendent relativement à l'éloignement de ces éléments du balai d'essuyage, une extrémité inférieure de tels éléments correspondant à l'extrémité disposée au voisinage de ce balai d'essuyage tandis qu'une extrémité supérieure correspond à l'extrémité disposée à distance du balai d'essuyage.

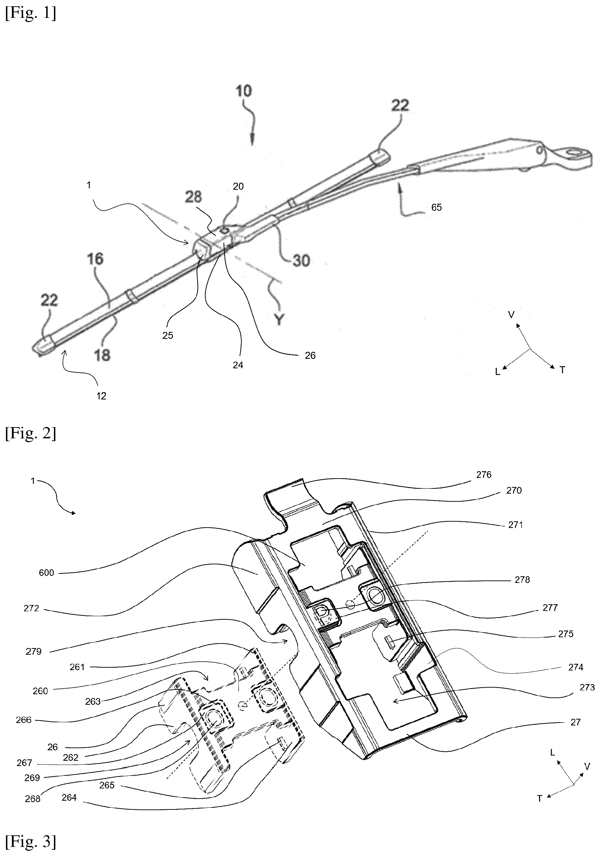

La figure 1 illustre schématiquement un système d'essuyage 10 selon l'invention, comportant un balai d'essuyage 12 et un bras d'entraînement 65 du balai d'essuyage 12.

Le balai d'essuyage 12 comprend un corps longitudinal 16, une lame d'essuyage 18, en général en caoutchouc, et au moins une vertèbre, non visible, qui rigidifie la lame d'essuyage 18 et favorise son application sur un pare-brise de véhicule.

Le balai d'essuyage 12 schématiquement représenté comprend en outre des embouts d'extrémité ou agrafes d'accrochage 22 de la lame d'essuyage 18 et de la vertèbre sur le corps longitudinal 16, ces embouts d'extrémité 22 étant situés à chacune des extrémités longitudinales du corps longitudinal 16.

Le balai d'essuyage 12 porte sensiblement en son milieu un dispositif de connexion 1 selon l'invention. Ce dispositif de connexion 1 comprend notamment un connecteur 24, et au moins deux adaptateurs. Ces adaptateurs sont ici un adaptateur de base 25 et un adaptateur complémentaire, ici un premier adaptateur 26.

L'adaptateur de base 25 et le premier adaptateur 26 participent à relier le connecteur 24 à un type particulier de bras d'entraînement, ici un deuxième type de bras d'entraînement 65. L'adaptateur de base 25 et le premier adaptateur 26 sont montés sur le connecteur 24 de façon à garder un degré de liberté en pivotement autour d'un axe d'articulation Y qui est un axe transversal sensiblement perpendiculaire à l'axe longitudinal du balai d'essuyage 12. Ce degré de liberté autorise un pivotement du balai d'essuyage 12 vis-à-vis du bras d'entraînement 65 et permet ainsi au balai d'essuyage 12 de suivre la courbure du pare-brise lors de ses déplacements. L'adaptateur de base 25 et le premier adaptateur 26 peuvent être désolidarisés du bras d'entraînement 65, par exemple par appui sur un bouton d'actionnement, ici un bouton poussoir 20, porté par l'adaptateur de base 25.

Le bras d'entraînement 65 est entraîné par un moteur, non représenté, pour suivre un mouvement angulaire de va-et-vient permettant d'évacuer l'eau, et éventuellement d'autres éléments indésirables recouvrant le pare-brise. L'adaptateur de base 25 et le premier adaptateur 26 assurent la liaison du balai d'essuyage 12 au bras d'entraînement 65. Plus particulièrement, ils participent à la liaison d'une tête ou pièce terminale 28 du bras d'entraînement 65, qui peut être formée d'un seul tenant avec le bras d'entraînement 65 ou encore être rapportée et fixé sur une tige de celui-ci.

La pièce terminale 28 a une forme allongée selon une direction générale sensiblement parallèle à la direction longitudinale du balai d'essuyage 12. La pièce terminale 28 se prolonge à l'une de ses extrémités longitudinales par une partie de liaison 30 à la tige du bras d'entraînement 65.

La figure 2 correspond à une représentation en perspective d'une vue de dessus d'une partie du dispositif de connexion de la figure 1, un premier adaptateur 26 et un deuxième adaptateur 27 étant associés. Ce premier adaptateur 26 et ce deuxième adaptateur 27 sont des adaptateurs complémentaires, destinés à être combinés avec l'adaptateur de base 25.

Le premier adaptateur 26 est une pièce dont une section transversale est sensiblement en forme de U, comprenant une paroi supérieure 260 ainsi qu'une première paroi latérale 261 et une deuxième paroi latérale 262. Ces parois 260, 261 et 262 définissent un logement interne 263, ce logement interne étant notamment apte à recevoir un connecteur 24, non représenté, ou un autre adaptateur. La paroi supérieure 260 s'étend principalement dans un plan transversal-longitudinal, tandis que les parois latérales 261 et 262 s'étendent dans des plans longitudinaux-verticaux parallèles et distincts. Les parois latérales 261 et 262 sont ainsi parallèles entre elles et perpendiculaires à la paroi supérieure 260. Par ailleurs, le premier adaptateur 26 est sensiblement symétrique selon un plan de symétrie s'étendant dans des directions longitudinale et verticale, situé à équidistance de la première paroi latérale 261 et de la deuxième paroi latérale 262.

La paroi supérieure 260 ne s'étend pas sur toute la longueur des parois latérales 261 et 262 ; autrement dit, la paroi supérieure 260 ne s'étend pas d'une extrémité longitudinale à l'autre du premier adaptateur 26. En effet, ce premier adaptateur 26 présente des dégagements sur la paroi supérieure 260, au voisinage de chaque extrémité longitudinale du premier adaptateur 26. En vue de dessus, le premier adaptateur 26 présente donc une forme de H.

Les parois latérales 261 et 262 présentent des faces internes 264, qui sont celles qui sont en regard du logement interne 263. Ces faces internes 264, qui sont donc opposées l'une à l'autre, portent des butées 265 qui font saillie depuis les faces internes 264 et s'étendent dans le logement interne 263. Ces butées 265 sont des moyens de maintien qui participent notamment à maintenir en place le premier adaptateur 26 lorsque celui-ci est assemblé à un autre adaptateur, sécurisant ainsi l'assemblage de plusieurs pièces.

La paroi supérieure 260 présente, selon le mode de réalisation représenté en figure 2, deux cavités 266 de formes carrées, disposées au voisinage des parois latérales 261 et 262. Ces cavités 266 sont des renfoncements dans la paroi supérieure 260, qui s'étendent depuis une face supérieure de celle-ci vers le logement interne 263. Les cavités 266 possèdent des parois de fond 267, s'étendant selon une direction d'allongement du dispositif de connexion 1 correspondant à la direction longitudinale. Ces parois de fond 267 comportent des marquages 268, ici des lettres O. Ces marquages 268 sont lisibles quelle que soit l'orientation longitudinale du premier adaptateur 26. Ces marquages 268 sont destinés à associer, par exemple visuellement, le premier adaptateur 26 à un type particulier de bras d'entraînement, lorsqu'ils sont pris en combinaison avec une référence 258 portée par l'adaptateur de base 25. Une telle combinaison sera décrite plus précisément ci-après.

Chacune des parois latérales 261 et 262 présente un dégagement 269, qui s'étend depuis un bord libre de cette paroi latérale en direction de la paroi supérieure du premier adaptateur 26. Le dégagement 269 de la paroi latérale 261 est symétrique au dégagement 269 de la paroi latérale 262 selon le plan de symétrie. Ces dégagements 269, dont la forme est celle d'un arc de cercle, sont aptes à recevoir un arbre d'un bras d'entraînement.

Le deuxième adaptateur 27 est également une pièce dont une section transversale est sensiblement en forme de U. Le deuxième adaptateur 27 comporte une paroi supérieure 270 ainsi qu'une première paroi latérale 271 et une deuxième paroi latérale 272. La paroi supérieure 270 s'étend principalement dans un plan transversal-longitudinal, tandis que les parois latérales 271 et 272 s'étendent principalement dans des plans longitudinaux-verticaux parallèles et distincts. Les parois latérales 271 et 272 sont ainsi parallèles entre elles et perpendiculaires à la paroi supérieure 270. Ces parois 270, 271 et 272 définissent un logement interne 273, ce logement interne étant notamment apte à recevoir un autre adaptateur, dans le cas présent le premier adaptateur 26 décrit ci-dessus. La paroi supérieure 270 présente un évidement 600 en son centre, de telle sorte que cette paroi supérieure 270 ne constitue qu'un cadre. Au niveau de cet évidement central 600 de la paroi supérieure 270, le logement interne 273 communique avec l'environnement extérieur à l'adaptateur concerné. La paroi supérieure 270 comporte par ailleurs une patte courbée 276, qui s'étend depuis l'une des extrémités longitudinales du deuxième adaptateur 27 et à distance de celle-ci. Cette patte courbée 276 participe à l'assemblage du deuxième adaptateur 27 avec d'autres pièces, et notamment avec d'autres adaptateurs.

Les parois latérales 271 et 272 présentent des faces internes 274, qui sont celles qui sont en regard du logement interne 273. Ces faces internes 274, qui sont donc opposées l'une à l'autre, portent des butées 275 qui font saillie des faces internes 274 et s'étendent dans le logement interne 273. Ces butées 275 permettent notamment de solidariser le deuxième adaptateur 27 à un autre adaptateur, empêchant la translation de ce deuxième adaptateur 27 selon une direction verticale.

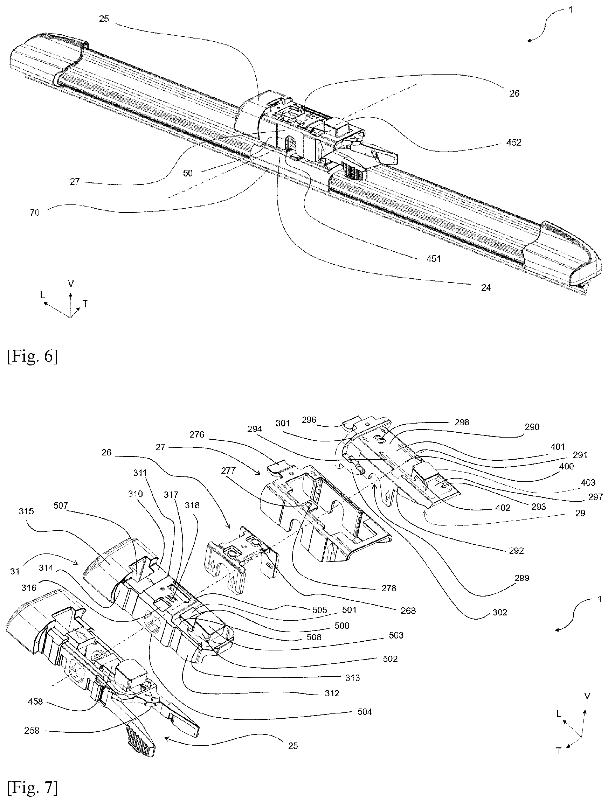

Chacune des parois latérales 271 et 272 présente un dégagement 279, qui s'étend depuis l'extrémité inférieure du deuxième adaptateur 27 en direction de son extrémité supérieure. Le dégagement 279 de la paroi latérale 271 est symétrique au dégagement 279 de la paroi latérale 272 selon le plan de symétrie. Ces dégagements 279, dont la forme est celle d'un arc de cercle, sont aptes à recevoir un arbre 573 d'un bras d'entraînement, par exemple un troisième type de bras d'entraînement 57, un tel arbre 573 étant représenté en figure 7.

L'une des parois latérales 271 ou 272 porte au moins une excroissance 277, par exemple de forme carrée, qui fait saillie de cette paroi latérale 271 ou 272, dans le plan de la paroi supérieure du deuxième adaptateur. Cette excroissance 277 est constituée par un prolongement de matière en direction de l'autre paroi latérale 271 ou 272, autrement dit, en direction de la paroi latérale 271 ou 272 à partir de laquelle elle ne fait pas saillie. L'excroissance 277 entraîne donc une asymétrie du deuxième adaptateur 27 selon un plan s'étendant dans des directions longitudinale et verticale, situé à équidistance de la première paroi latérale 271 et de la deuxième paroi latérale 272.

L'excroissance 277 comporte un marquage 278, représenté ici par une lettre P, destiné à associer, par exemple visuellement, le deuxième adaptateur 27 à un type de bras d'entraînement lorsque ce marquage est combiné à la référence 258 portée par l'adaptateur de base 25. Une telle combinaison entre le marquage 278 et la référence 258 sera décrite plus spécifiquement par la suite.

Lorsque le premier adaptateur 26 et le deuxième adaptateur 27 sont associés au sein du dispositif de connexion 1, le premier adaptateur 26 vient se loger dans le logement interne 273 du deuxième adaptateur 27. Les parois latérales 261 et 262 du premier adaptateur 26 sont ainsi en regard des parois latérales 271 et 272 du deuxième adaptateur 27. La paroi supérieure 260 du premier adaptateur 26 vient se loger dans l'évidement central 600 formé dans la paroi supérieure 270 du deuxième adaptateur 27, de telle sorte que la paroi supérieure 260 n'est recouverte par la paroi supérieure 270 qu'à l'endroit de l'une des deux cavités 266.

L'excroissance 277 vient en effet se loger dans l'une des cavités 266, de sorte qu'au moins un des marquages 268 du premier adaptateur 26 soit recouvert par le marquage 278 porté par l'excroissance 277 du deuxième adaptateur 27. Ainsi, le marquage 278 du deuxième adaptateur 27 est superposé à au moins l'un des marquages 268 du premier adaptateur 26, tel que représenté sur la figure, en pointillés, au niveau de l'excroissance 277.

Le premier adaptateur 26 et/ou le deuxième adaptateur 27 peuvent être associés à un adaptateur de base 25, qui est représenté en figure 3 selon un premier mode de réalisation.

L'adaptateur de base 25 s'étend principalement selon la direction longitudinale. Cet adaptateur de base 25 présente un corps 254 qui comprend une première paroi latérale 251 et une deuxième paroi latérale 252 sensiblement parallèles entre elles, à distance l'une de l'autre. Ces parois 251, 252 sont reliées entre elles par une paroi supérieure 250 qui leur est sensiblement perpendiculaire. Les parois 250, 251, 252 de cet adaptateur de base 25 présentent une forme allongée selon la direction longitudinale, et elles définissent entre elles un logement interne 253 destiné à accueillir le connecteur 24.

À une de ses extrémités longitudinales, le corps 254 de l'adaptateur de base 25 est relié à une tête 255, dont les dimensions verticales et transversales sont supérieures à celles du corps 254 de l'adaptateur de base 25. On comprend ainsi que la tête 255 s'étend au-delà d'un plan longitudinal et transversal dans lequel s'étend la paroi supérieure 250, et au-delà d'un plan longitudinal et vertical dans lequel s'étendent les parois latérales 251 et 252. La tête 255 joue notamment le rôle d'organe de verrouillage. En effet, lorsque le balai d'essuyage 12 est assemblé sur le bras d'entraînement 65 par l'intermédiaire du dispositif de connexion 1 comme illustré sur la figure 1, cette tête 255 forme une butée pour la pièce terminale 28, empêchant ainsi la translation de celle-ci au-delà du corps 254 de l'adaptateur de base 25. La tête 255 présente par ailleurs, sur une de ses faces internes non visible sur la figure 3, une portion interne courbée apte à recevoir la patte courbée 276 du deuxième adaptateur 27, formant ainsi un autre moyen de retenue.

À une autre de ses extrémités longitudinales, la paroi supérieure 250 de l'adaptateur de base 25 se rétrécit de façon à former une pointe 257, qui est en porte-à-faux par rapport au corps 255. Cette pointe 257 porte une référence 258, représentée ici par la lettre X, qui est destinée à associer l'adaptateur de base 25 à un premier type de bras d'entraînement, non illustré.

Au niveau de cette autre extrémité longitudinale, le corps 254 de l'adaptateur de base 25 et plus particulièrement les parois latérales 251, 252 se poursuivent chacune par une jambe 256 déformable élastiquement. Ces jambes 256 peuvent ainsi être rapprochées l'une de l'autre par déformation élastique. Les jambes 256 sont sensiblement symétriques selon un plan de symétrie s'étendant dans des directions longitudinale et verticale, situé à équidistance de la première paroi latérale 251 et de la deuxième paroi latérale 252. Chaque jambe 256 présente en outre une portion de verrouillage 426, conformée pour coopérer avec des encoches disposées sur la pièce terminale 28 afin de verrouiller l'assemblage de l'adaptateur de base 25 avec cette dernière, constituant ainsi un autre moyen de verrouillage adapté au type de balai d'entraînement spécifique de l'adaptateur de base 25.

La paroi supérieure 250 est percée de trois ouvertures, avec une première ouverture 259, une deuxième ouverture 359 et une troisième ouverture 459, alignées selon la direction longitudinale et donnant accès au logement interne 253. La première ouverture 259 permet l'engagement d'une patte équipant la pièce terminale 28 du bras d'entraînement 5. La troisième ouverture 459, qui est au voisinage des jambes 256, est en partie occupée par une languette 458. Cette languette 458 s'étend principalement selon la direction longitudinale et présente une extrémité fixe 457 à distance des jambes 256, qui est reliée à la paroi latérale 251 et à la paroi latérale 252 par un pontet, et une extrémité libre 456 étant mobile au voisinage des jambes 256. La languette 458 est déformable élastiquement et son extrémité libre 456 porte un bouton poussoir 455. Au repos, c'est-à-dire sans contrainte, la languette 458 est disposée d'une façon telle que le bouton poussoir 455 se situe au-dessus du plan dans lequel s'étend la paroi supérieure 250. Lors du montage de l'adaptateur de base 25 dans la pièce terminale 28, le bouton poussoir 455 s'engage par encliquetage élastique dans une ouverture correspondante de la pièce terminale 28 afin de verrouiller l'adaptateur de base 25 vis-à-vis de cette dernière.

Les parois latérales 251 et 252 sont par ailleurs équipées respectivement d'un orifice traversant 451 et 452, ouvert sur le logement interne 253. L'orifice 451 est sensiblement circulaire et l'orifice 452 est sensiblement parallélépipédique, et tous deux définissent un axe Y de pivotement de l'adaptateur de base 25 relativement au connecteur 24, non représenté sur la présente figure, et par extension du balai d'essuyage 12 relié à l'adaptateur de base 25 relativement au bras d'entraînement relié au connecteur 24. L'orifice 451 présente une bague 453 qui fait saillie sur la paroi latérale 251, s'étendant depuis cette paroi latérale 251 en direction du logement interne 253. La bague 453 participe à l'assemblage de l'adaptateur de base 25 avec le connecteur 24, par encliquetage élastique de cette bague 453 avec des moyens complémentaires dudit connecteur 24. Les orifices 451 et 452 et la bague 453 associée à l'orifice 451 forment un moyen de pivotement de l'adaptateur de base 25 vis-à-vis du connecteur 24.

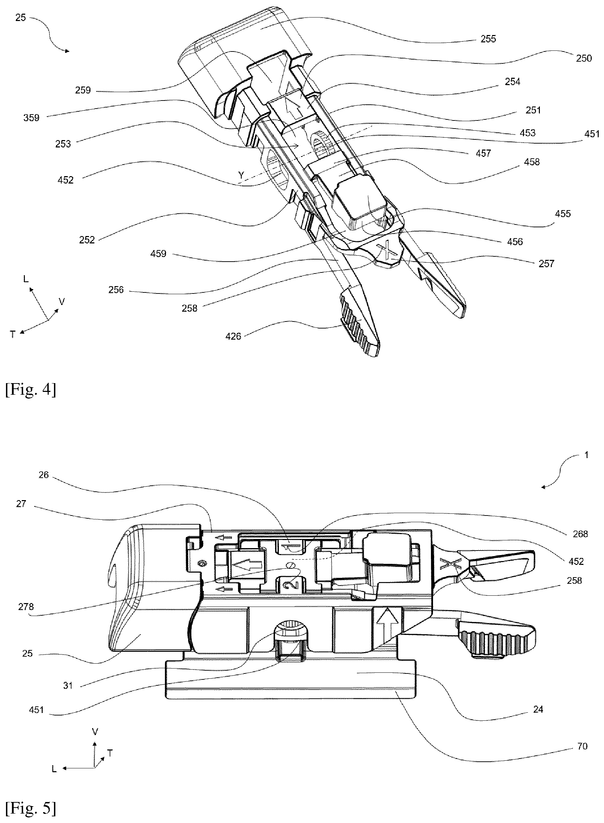

Les figures 4 et 5 sont des vues en perspective du dispositif de connexion 1 de la figure 1, ce dispositif de connexion 1 étant désolidarisé du balai d'essuyage 12 sur la figure 4 mais solidaire de celui-ci sur la figure 5. Cette figure 5 présente donc un balai d'essuyage 12 comprenant un dispositif de connexion 1 selon l'invention.

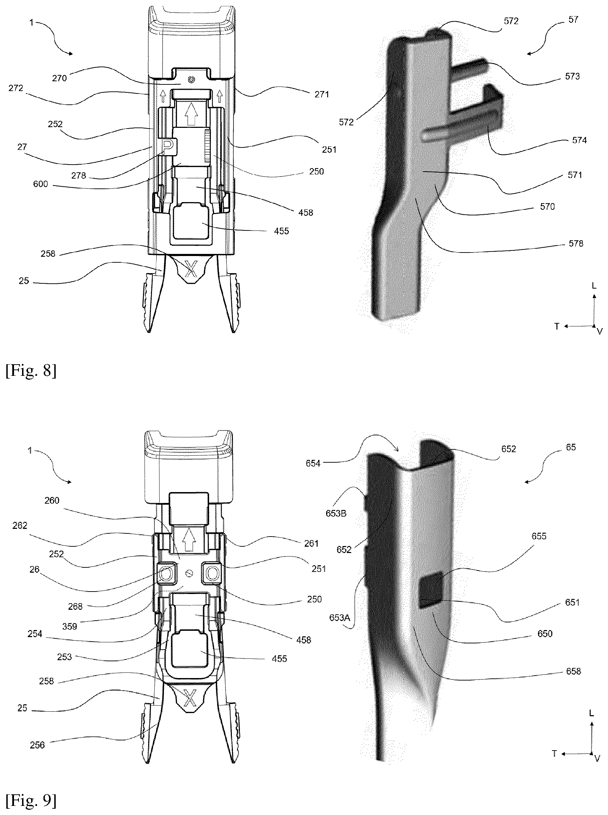

Selon le mode de réalisation représenté sur ces figures, le dispositif de connexion 1 comprend notamment le connecteur 24, l'adaptateur de base 25, le premier adaptateur 26 et le deuxième adaptateur 27, chacun de ces adaptateurs 25, 26 et 27 participant à relier le connecteur 24 à un type particulier de bras d'entraînement 56, représenté en figure 9. Le connecteur 24 comprend une embase 70, qui s'étend principalement selon la direction longitudinale. Ce connecteur 24 est solidaire du balai d'essuyage 12 par l'intermédiaire de cette embase 70.

L'adaptateur de base 25 comprend au moins un organe de pivotement 50 le reliant mécaniquement au connecteur 24, au niveau de ses orifices 451 et 452. Cet organe de pivotement 50 constitue une articulation qui assure la rotation du connecteur 24 par rapport à l'adaptateur de base 25. Ainsi, lorsque le connecteur 24 est solidaire d'un balai d'essuyage 12 comme c'est le cas sur la figure 5, par exemple par sertissage, ce balai d'essuyage 12 peut pivoter par rapport à l'adaptateur de base 25 et au bras d'entraînement auquel cet adaptateur de base 25 est relié. De ce fait, le balai d'essuyage 12 peut lors de ses déplacements suivre parfaitement la surface courbée du pare-brise du véhicule qu'il équipe.

Selon le mode de réalisation présenté par ces figures 4 et 5, l'adaptateur de base 25, le premier adaptateur 26 et le deuxième adaptateur 27 sont associés au titre du dispositif de connexion 1.

Selon l'invention, une combinaison des marquages et des références des adaptateurs forme un code, par exemple visuel, associé à des types particuliers de bras d'entraînement. Les marquages, qui étaient représentés par des lettres sur la figure 4, sont illustrés par des chiffres sur la figure 5. On comprend ainsi qu'une combinaison entre la référence 258 de l'adaptateur de base 25 avec le marquage 268 du premier adaptateur 26 forme un code associé à un type particulier de bras d'entraînement, le deuxième type de bras d'entraînement 65. Une combinaison entre la référence 258 de l'adaptateur de base 25 avec le marquage 278 du deuxième adaptateur 27 forme un autre code visuellement associé à un autre type particulier de bras d'entraînement, le troisième type de bras d'entraînement 57. Une combinaison entre la référence 258 de l'adaptateur de base 25 avec le marquage 268 du premier adaptateur 26 et le marquage 278 du deuxième adaptateur 27 forme encore un autre code visuellement associé à encore un autre type particulier de bras d'entraînement, le quatrième type de bras d'entraînement 56, ces types particuliers de bras d'entraînement 65, 57 et 56, respectivement illustrés aux figures 8, 7 et 9, étant tous structurellement différents les uns des autres et structurellement différents du premier type de bras d'entraînement auquel l'adaptateur de base 25 seul est associé . L'association entre chaque combinaison de références et marquages et chaque type particulier de bras d'entraînement correspondant sera décrite plus en détail ci-après.

La figure 6 présente une vue en éclaté des différents adaptateurs pouvant participer à la composition du dispositif de connexion 1. Cette vue en éclaté est donnée à titre indicatif, et ne signifie pas que tous les adaptateurs présentés sont compatibles les uns avec les autres, ou encore qu'une combinaison de références et marquages choisis au hasard parmi les références et marquages de ces différents adaptateurs correspondra à un type particulier de bras d'entraînement.

Selon un aspect de l'invention, au moins deux de ces différents adaptateurs s'imbriquent l'un dans l'autre. Une telle imbrication se traduit par le fait que les adaptateurs, premier, deuxième ou de base, qui sont des pièces sensiblement en forme de U, peuvent s'emboîter les uns dans les autres. Un adaptateur en U peut ainsi recouvrir un autre adaptateur en U, qui peut lui-même recouvrir encore un autre adaptateur en U et ainsi de suite.

Au titre de ces différents adaptateurs, on retrouve notamment l'adaptateur de base 25, le premier adaptateur 26 et le deuxième adaptateur 27. Le dispositif de connexion 1 peut en outre faire intervenir un autre adaptateur complémentaire, ici un troisième adaptateur 29. Le dispositif de connexion 1 peut aussi faire intervenir un adaptateur primaire 31, qui est un adaptateur de base selon un autre mode de réalisation que le mode de réalisation décrit relativement à l'adaptateur de base 25 pour les précédentes figures. Cet adaptateur primaire 31 correspond donc à une alternative de l'adaptateur de base 25.

Adaptateur de base 25 et adaptateur primaire 31 sont incompatibles ; on entend par là que le dispositif de connexion 1 peut comporter soit l'un, soit l'autre, mais pas une association de ces deux éléments. Tout comme l'adaptateur de base 25, l'adaptateur primaire 31 est directement au contact du connecteur 24 et comprend un moyen de rotation par rapport à celui-ci. Chacun de ces deux adaptateurs 25 et 31 peut donc être associé au connecteur 24, mais ils ne sont pas configurés pour s'imbriquer l'un dans l'autre.

L'adaptateur primaire 31 s'étend principalement selon la direction longitudinale. Cet adaptateur primaire 31 présente un corps 314 qui comprend une première paroi latérale 311 et une deuxième paroi latérale 312 sensiblement parallèles entre elles, à distance l'une de l'autre. Ces parois 311, 312 sont reliées entre elles par une paroi supérieure 310 qui leur est sensiblement perpendiculaire. Les parois 310, 311, 312 présentent une forme allongée selon la direction longitudinale, et elles définissent entre elles un logement interne 313 destiné à accueillir le connecteur 24, non représenté.

À une de ses extrémités longitudinales, le corps 314 de l'adaptateur primaire 31 est relié à une tête 315, dont les dimensions verticales et transversales sont supérieures à celles du corps 314 de l'adaptateur primaire 31. On comprend ainsi que la tête 315 s'étend au-delà d'un plan longitudinal et transversal dans lequel s'étend la paroi supérieure 310, et au-delà d'un plan longitudinal et vertical dans lequel s'étendent les parois latérales 311 et 312. La tête 315 participe à remplir le rôle d'organe de blocage. En effet, lorsque le balai d'essuyage 12 est assemblé sur un type particulier de bras d'entraînement, associé à l'adaptateur primaire 31, par l'intermédiaire du dispositif de connexion 1, cette tête 315 forme une butée pour la pièce terminale 28, empêchant ainsi la translation de celle-ci au-delà du corps 314 de l'adaptateur primaire 31. La tête 315 présente par ailleurs, sur une de ses faces internes non visible sur la figure 6, une portion interne courbée apte à recevoir la patte courbée 276 du deuxième adaptateur 27, formant ainsi un autre moyen de verrouillage.

La paroi supérieure 310 de l'adaptateur primaire 31 comporte une cavité 316 et deux fentes parallèles 317, toutes les trois disposées sensiblement au milieu du corps 314 de l'adaptateur primaire 31 selon une direction longitudinale. La cavité 316 est de forme sensiblement carrée, tandis que les fentes parallèles 317 s'étendent parallèlement aux parois latérales 311 et 312. La paroi supérieure porte, entre cette cavité 316 d'une part et ces fentes parallèles 317 d'autre part, une référence 318 destinée à associer visuellement cet adaptateur primaire 31 à un type particulier de bras d'entraînement, non représenté. On comprend que ce type particulier de bras d'entraînement est structurellement distinct des types particuliers de bras d'entraînement auxquels sont associés, en combinaison ou séparément, l'adaptateur de base 25 selon le premier mode de réalisation, le premier adaptateur 26 et le deuxième adaptateur 27.

La cavité 316 est, à l'instar de la cavité 266 du premier adaptateur 26, apte à loger l'excroissance 277 du deuxième adaptateur 27 lorsque ce deuxième adaptateur 27 est associé à l'adaptateur primaire 31. On comprend donc qu'il est possible de combiner l'adaptateur primaire 31 et le deuxième adaptateur 27.

À la différence de l'adaptateur de base 25, l'adaptateur primaire 31 ne possède pas de pattes. Ainsi, lorsque l'adaptateur primaire 31 est compris dans un système d'essuyage, il est possible d'intégrer à ce système d'essuyage une fonction d'arrosage, qui est incompatible avec les pattes 256 de l'adaptateur de base 25. On comprend ainsi que la configuration de l'adaptateur primaire 31, et notamment l'absence de pattes, permet l'intégration de cette fonction d'arrosage, que l'adaptateur primaire 31 soit utilisé seul ou en combinaison avec le deuxième adaptateur 27.

La paroi supérieure 310 est de plus percée d'une première ouverture 507 et d'une deuxième ouverture 508, alignées selon la direction longitudinale et donnant accès au logement interne 313. La première ouverture 507 permet l'engagement d'une patte équipant la pièce terminale 28 d'un bras d'entraînement associé à l'adaptateur primaire 31. La deuxième ouverture 508, qui est au voisinage d'une extrémité longitudinale de l'adaptateur primaire 31 opposée à la tête 315, est en partie recouverte par une languette 500. Cette languette 500 présente une extrémité fixe 501 reliée à la paroi supérieure 310, et une extrémité libre 502 mobile, à une distance de l'extrémité longitudinale qui porte la tête 315 plus importante que la distance qui sépare cette tête 315 de l'extrémité fixe 501. La languette 500 est déformable élastiquement, et son extrémité libre 502 porte un bouton poussoir 503. Au repos, c'est-à-dire sans contrainte, la languette 500 est disposée d'une façon telle que le bouton poussoir 503 se situe au-dessus du plan dans lequel s'étend la paroi supérieure 310. Lors du montage de l'adaptateur primaire 31 dans la pièce terminale 28, le bouton poussoir 503 s'engage par encliquetage élastique dans une ouverture correspondante de la pièce terminale 28 afin de verrouiller l'adaptateur primaire 31 vis-à-vis de cette dernière.

Les parois latérales 311 et 312 de l'adaptateur primaire 31 sont par ailleurs équipées respectivement d'un orifice traversant 504 et 505, l'orifice 505 n'étant pas visible, qui s'ouvrent sur le logement interne 313. L'orifice 505 est sensiblement circulaire et l'orifice 504 est sensiblement parallélépipédique, et tous deux définissent un axe Y de pivotement de l'adaptateur primaire 31 relativement au connecteur 24, non représenté sur la présente figure, et par extension du balai d'essuyage 12 relié à l'adaptateur primaire 31 relativement au bras d'entraînement relié au connecteur 24. L'orifice 505 présente une bague qui fait saillie sur la paroi latérale 311, s'étendant depuis cette paroi latérale 311 en direction du logement interne 313. Cette bague participe à l'assemblage de l'adaptateur primaire 31 avec le connecteur 24, par encliquetage élastique de cette bague avec des moyens complémentaires dudit connecteur 24. Les orifices 504 et 505 et la bague associée à l'orifice 505 forment un moyen de pivotement de l'adaptateur primaire 31 vis-à-vis du connecteur 24.

Le troisième adaptateur 29 est un adaptateur complémentaire, au sens de l'invention, qui vient se substituer au premier adaptateur 26, au deuxième adaptateur 27, ou à leur combinaison. Il s'agit d'une pièce dont une section transversale est sensiblement en forme de U. Le troisième adaptateur 29 comporte une paroi supérieure 290 ainsi qu'une première paroi latérale 291 et une deuxième paroi latérale 292. La paroi supérieure 290 s'étend principalement dans un plan transversal-longitudinal, tandis que les parois latérales 291 et 292 s'étendent principalement dans des plans longitudinaux-verticaux parallèles et distincts. Les parois latérales 291 et 292 sont ainsi parallèles entre elles et perpendiculaires à la paroi supérieure 290. Ces parois 290, 291 et 292 définissent un logement interne 293, ce logement interne étant notamment apte à recevoir un connecteur 24 ou un autre adaptateur. Le troisième adaptateur 29 présente un épaulement 301, qui comporte une patte courbée 296 s'étendant depuis une des extrémités longitudinales du troisième adaptateur 29 et à distance de celle-ci. Cette patte courbée 296 participe à l'assemblage du troisième adaptateur 29 avec d'autres pièces et notamment avec d'autres adaptateurs, comme par exemple l'adaptateur de base 25.

L'épaulement 301 de l'extrémité longitudinale du troisième adaptateur 29 qui comporte la patte courbée 296 se prolonge, à distance de cette patte courbée 296, par deux oreilles 302 qui sont plaquées contre les parois latérales 291 et 292. Ces oreilles 302 permettent d'arrimer le troisième adaptateur 29 à un bras d'entraînement, et constituent à ce titre des moyens de verrouillage.

Chacune des parois latérales 291 et 292 présente un dégagement 299, qui s'étend depuis l'extrémité inférieure du troisième adaptateur 29 en direction de son extrémité supérieure. Le dégagement 299 de la paroi latérale 291 est symétrique au dégagement 299 de la paroi latérale 292 selon le plan de symétrie. Ces dégagements 299, dont la forme est celle d'un arc de cercle, sont aptes à recevoir un arbre d'un bras d'entraînement adapté au troisième adaptateur 29, un tel arbre n'étant pas représenté sur la présente figure.

La paroi supérieure 290 du troisième adaptateur 29 est percée de deux fentes parallèles 294, disposées sur la paroi supérieure 290 au voisinage de chacune de parois latérales 291 et 292. Ces fentes parallèles 294 sont alignées l'une avec l'autre selon la direction transversale et donnent sur le logement interne 293. Ces fentes parallèles 294 débouchent, à une extrémité longitudinale du troisième adaptateur 29 qui ne porte pas la patte courbée 296, sur une ouverture 297 percée elle aussi dans la paroi supérieure 290. Cette ouverture 297 est en partie recouverte par une languette 400. Cette languette 400 présente une extrémité fixe 401 reliée à la paroi supérieure 290, et une extrémité libre 402 mobile, à une distance de l'extrémité longitudinale qui porte la patte courbée 296 plus importante que la distance qui sépare cette patte courbée 296 de l'extrémité fixe 401. La languette 400 est déformable élastiquement, et son extrémité libre 402 porte un bouton poussoir 403. Au repos, c'est-à-dire sans contrainte, la languette 400 est disposée d'une façon telle que le bouton poussoir 403 se situe au-dessus du plan dans lequel s'étend la paroi supérieure 290. Lors de l'assemblage du troisième adaptateur 29 avec un autre adaptateur pour former un dispositif de connexion 1 selon l'invention, par exemple avec un adaptateur de base 25, la languette 400 du troisième adaptateur 29 vient recouvrir la languette 458 de l'adaptateur de base 25.

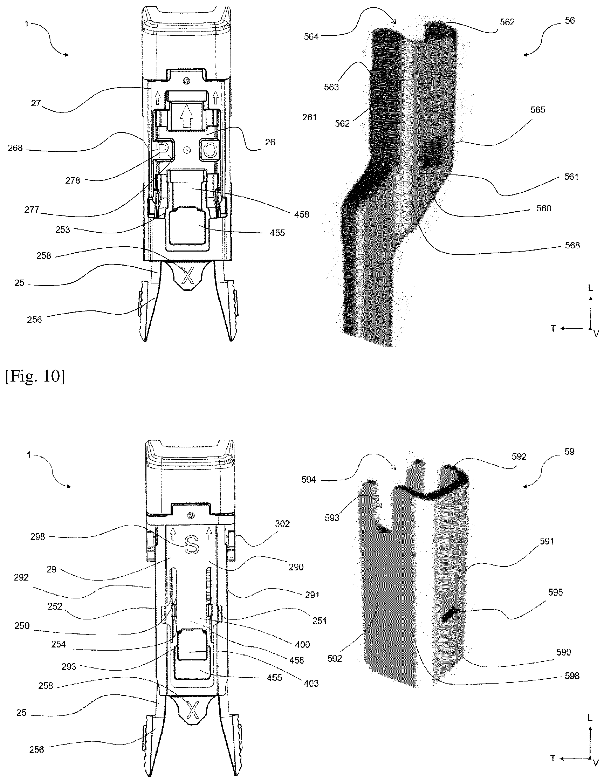

La paroi supérieure 290 du troisième adaptateur 29 porte un marquage 298, ici la lettre S. Lorsque le troisième adaptateur 29 est associé au premier adaptateur 26 et/ou au deuxième adaptateur 27, la paroi supérieure 290 vient, au moins en partie, recouvrir les marquages de ces adaptateurs 26 et 27, qui sont respectivement les marquages 268 et 278. À l'inverse, lorsque le troisième adaptateur 29 est associé à l'adaptateur de base 25, la référence 258 de cet adaptateur de base 25 n'est pas recouverte par la paroi supérieure 290 du troisième adaptateur 29. Il est ainsi possible pour un utilisateur du dispositif de connexion 1 d'effectuer une combinaison du marquage 298 du troisième adaptateur 29 et de la référence 258 de l'adaptateur de base 25, formant ainsi un code. Ce code est associé par exemple visuellement au cinquième type particulier de bras d'entraînement 59, représenté en figure 10, qui est structurellement distinct des types de bras d'entraînement évoqués précédemment.

Les figures 7 à 10 présentent différents modes de réalisation du dispositif de connexion 1 selon plusieurs associations possibles d'adaptateurs, avec les bras d'entraînement destinés à être associés visuellement aux différentes combinaisons de références et marquages de ces adaptateurs. De telles références et marquages sont de préférence disposés sur une partie des adaptateurs qui est visible par l'utilisateur lorsqu'il utilise le dispositif de connexion dispositif de connexion 1. Sur ces figures 7 à 10, les dispositifs de connexion 1 sont illustrés en vue de dessus tandis que les bras d'entraînement sont représentés selon une vue en perspective de côté. Ces bras d'entraînement sont ici disposés à côté des dispositifs de connexion 1, mais on comprend qu'ils sont destinés à s'enchâsser sur ces dispositifs de connexion 1 afin de former, avec le balai d'essuyage et le connecteur, un système d'essuyage.

La figure 7 illustre un dispositif de connexion 1 comprenant l'adaptateur de base 25 et le deuxième adaptateur 27. Ce dispositif de connexion 1 est ici associé au troisième type de bras d'entraînement 57.

Le deuxième adaptateur 27 recouvre partiellement l'adaptateur de base 25 de telle sorte que ses parois latérales 271, 272 sont placées en regard des parois latérales 251, 252 de l'adaptateur de base 25. La patte courbée 276 du deuxième adaptateur 27 vient au contact d'une portion interne courbée apte à la recevoir qui est disposée sur une des faces internes de la tête 315, cette patte courbée 276 et cette face interne n'étant pas visibles sur la présente figure. La paroi supérieure 270 du deuxième adaptateur 27 recouvre la paroi supérieure 250 de l'adaptateur de base 25, l'évidement central 600 du deuxième adaptateur 27 laissant accessible la languette 458 et le bouton poussoir 455 de l'adaptateur de base 25.

Lorsque ces deux adaptateurs 25 et 27 sont assemblés, l'utilisateur du dispositif de connexion 1 ainsi formé se réfère au code constitué par la combinaison de la référence 258 de l'adaptateur de base 25 et du marquage 278 du deuxième adaptateur 27, et il peut ainsi vérifier que cette combinaison forme bien le code associé visuellement au type particulier de bras d'entraînement qui équipe son véhicule, correspondant au troisième type de bras d'entraînement 57.

Ce bras d'entraînement 57 comprend une chape 570 formée dans la partie terminale 578 du troisième type de bras d'entraînement 57. Cette chape 570 se compose notamment d'une paroi longitudinale 571, s'étendant selon la direction longitudinale du bras d'entraînement 57, cette paroi longitudinale 571 étant bordée de deux flancs latéraux 572 qui lui sont perpendiculaires. L'un de ces deux flancs latéraux 572 porte un arbre 573 et un bras de verrouillage 574, qui s'étendent depuis ce flanc latéral 572 et perpendiculairement à celui-ci. Lors de l'association du dispositif de connexion 1 comprenant cet adaptateur de base 25 et ce deuxième adaptateur 27 au troisième type de bras d'entraînement 57, le dispositif de connexion 1 est pivoté de 45 ° de façon que l'arbre 573 s'insère dans les orifices 451 et 452 de l'adaptateur de base, puis il est aligné selon la direction longitudinale. Le bras de verrouillage 574 enserre alors le dispositif de connexion 1, assurant sa solidarisation avec le balai d'essuyage.

La figure 8 représente un dispositif de connexion 1 comprenant l'adaptateur de base 25 et le premier adaptateur 26, ce dispositif de connexion 1 étant sur cette figure associé au deuxième type de bras d'entraînement 65.

Le premier adaptateur 26 recouvre partiellement l'adaptateur de base 25 de telle sorte que ses parois latérales 261, 262 sont placées en regard des parois latérales 251, 252 de l'adaptateur de base 25. La paroi supérieure 260 du premier adaptateur 26 recouvre la paroi supérieure 250 de l'adaptateur de base 25, ce premier adaptateur 26 reposant sur le corps 254 de l'adaptateur de base 25. Plus précisément, ce corps 254 recouvre la deuxième ouverture 359 percée dans la paroi supérieure 250. Une telle disposition du premier adaptateur 26 laisse accessibles la languette 458 et le bouton poussoir 455 de l'adaptateur de base 25.

Lorsque ces deux adaptateurs 25 et 26 sont assemblés, l'utilisateur du dispositif de connexion 1 ainsi formé se réfère au code constitué par la combinaison de la référence 258 de l'adaptateur de base 25 et du marquage 268 du premier adaptateur 26, et il peut ainsi vérifier que cette combinaison forme bien le code associé au type particulier de bras d'entraînement qui équipe son véhicule, correspondant au deuxième type de bras d'entraînement 65.

Ce bras d'entraînement 65 comprend une chape 650 formée dans la partie terminale 658 du deuxième type de bras d'entraînement 65. Cette chape 650 se compose notamment d'une paroi longitudinale 651, s'étendant selon la direction longitudinale du bras d'entraînement 65, cette paroi longitudinale 651 étant bordée de deux flancs latéraux 652 qui lui sont perpendiculaires. La chape 650 est pourvue de deux bords pliés ménagés à l'extrémité libre de chacun des flancs latéraux 652. Un premier bord plié 653A est plus long qu'un second bord plié 653B, ce dernier étant disposé au voisinage d'une bouche d'entrée qui donne accès à une cavité de réception 654.

Lors de l'association du dispositif de connexion 1 comprenant cet adaptateur de base 25 et ce premier adaptateur 26 au deuxième type de bras d'entraînement 65, le dispositif de connexion 1 est inséré par coulissement longitudinal au sein de la cavité de réception 654 délimitée dans la chape 650 par la paroi longitudinale 651, les flancs latéraux 652 et les bords pliés 653A et 653B. À cet effet, les jambes 256 de l'adaptateur de base 25 sont déformées élastiquement afin d'être rapprochées pour pouvoir se loger dans la cavité de réception 654. De la même façon, la languette 458 et le bouton poussoir 455 de l'adaptateur de base 25 s'escamotent, et sont ainsi enfoncés vers le logement interne 253 de l'adaptateur de base 25. La translation longitudinale du dispositif de connexion 1 est bloquée lorsque le bouton poussoir 455 entre dans un orifice 655 percé dans la paroi longitudinale 651 de la chape 650, cet orifice 655 étant apte à le recevoir.

La figure 9 illustre un dispositif de connexion 1 selon l'invention, ce dispositif de connexion 1 étant notamment composé de l'adaptateur de base 25, du premier adaptateur 26 et du deuxième adaptateur 27. Ce dispositif de connexion 1 est ici associé au quatrième type de bras d'entraînement 56.

Ces adaptateurs 25, 26 et 27 sont imbriqués les uns dans les autres de telle sorte que le deuxième adaptateur 27 recouvre le premier adaptateur 26 qui lui-même recouvre l'adaptateur de base 25.

L'excroissance 277 du deuxième adaptateur 27 vient se loger dans l'une des cavités 266 du premier adaptateur 26, le marquage 268 du premier adaptateur 26 étant de ce fait recouverte par le marquage 278 portée par l'excroissance 277 du deuxième adaptateur 27. La référence 258 de l'adaptateur de base 25 n'est pas recouverte.

Lorsque ces trois adaptateurs 25, 26 et 27 sont imbriqués, l'utilisateur du dispositif de connexion 1 ainsi formé se réfère au code constitué par la combinaison de la référence 258 de l'adaptateur de base 25, du marquage 268 du premier adaptateur 26 et du marquage 278 du deuxième adaptateur 27, et il peut ainsi vérifier que cette combinaison forme bien le code associé au type particulier de bras d'entraînement qui équipe son véhicule, correspondant au quatrième type de bras d'entraînement 56.

Ce bras d'entraînement 56 comprend une chape 560 formée dans la partie terminale 568 du quatrième type de bras d'entraînement 56. Cette chape 560 se compose notamment d'une paroi longitudinale 561, s'étendant selon la direction longitudinale du bras d'entraînement 56, cette paroi longitudinale 561 étant bordée de deux flancs latéraux 562 qui lui sont perpendiculaires. À distance de la paroi longitudinale selon une direction verticale, la chape 560 est pourvue d'un bord plié 563 ménagé à l'extrémité libre de chacun des flancs latéraux 652.

Lors de l'association du dispositif de connexion 1 comprenant cet adaptateur de base 25, ce premier adaptateur 26 et ce deuxième adaptateur 27 au quatrième type de bras d'entraînement 56, le dispositif de connexion 1 est inséré au sein d'une cavité de réception 564 délimitée dans la chape 560 par la paroi longitudinale 561, les flancs latéraux 562 et le bord plié 563. À cet effet, les jambes 256 de l'adaptateur de base 25 sont déformées élastiquement afin d'être rapprochées pour pouvoir se loger dans la cavité de réception 564. De la même façon, la languette 458 et le bouton poussoir 455 de l'adaptateur de base 25 sont enfoncés vers le logement interne 253 de l'adaptateur de base 25. La translation longitudinale du dispositif de connexion 1 est bloquée lorsque le bouton poussoir 455 débouche dans un orifice 565 percé dans la paroi longitudinale 561, cet orifice 565 étant apte à le recevoir.

La figure 10 présente un dispositif de connexion 1 selon l'invention, ce dispositif de connexion 1 étant notamment composé de l'adaptateur de base 25 et du troisième adaptateur 29. Ce dispositif de connexion 1 est ici associé à un cinquième type de bras d'entraînement 59.

Lors de l'assemblage de l'adaptateur de base 25 et du troisième adaptateur 29, ce troisième adaptateur 29 vient partiellement recouvrir l'adaptateur de base 25, s'emboîtant par-dessus ce dernier. On comprend ainsi que le troisième adaptateur 29 recouvre l'adaptateur de base 25 de telle sorte que ses parois latérales 291, 292 sont placées en regard des parois latérales 251, 252 de l'adaptateur de base 25. La paroi supérieure 290 du troisième adaptateur 29 recouvre partiellement la paroi supérieure 250 de l'adaptateur de base 25, ce troisième adaptateur 29 reposant sur le corps 254 de l'adaptateur de base 25. De la même façon, la languette 400 du troisième adaptateur 29 vient recouvrir la languette 458 de l'adaptateur de base 25.

Lorsque ces deux adaptateurs 25 et 29 sont assemblés, l'utilisateur du dispositif de connexion 1 ainsi formé se réfère au code constitué par la combinaison de la référence 258 de l'adaptateur de base 25 et du marquage 298 du troisième adaptateur 29, et il peut ainsi vérifier que cette combinaison forme bien le code associé au type particulier de bras d'entraînement qui équipe son véhicule, correspondant au cinquième type de bras d'entraînement 59.

Ce bras d'entraînement 59 comprend une chape 590 formée dans la partie terminale 598 du cinquième type de bras d'entraînement 59. Cette chape 590 se compose notamment d'une paroi longitudinale 591, s'étendant selon la direction longitudinale du bras d'entraînement 59, cette paroi longitudinale 591 étant bordée de deux flancs latéraux 592 qui lui sont perpendiculaires. Chaque flanc latéral 592 présente une ouïe 593, qui s'étend depuis une première extrémité longitudinale de la chape 590 et selon une direction longitudinale.

Lors de l'association du dispositif de connexion 1 comprenant cet adaptateur de base 25 et ce troisième adaptateur 29 au cinquième type de bras d'entraînement 59, le dispositif de connexion 1 est inséré longitudinalement au sein d'une cavité de réception 594 délimitée dans la chape 590 notamment par la paroi longitudinale 591 et les flancs latéraux 592. À cet effet, les jambes 256 de l'adaptateur de base 25 sont déformées élastiquement afin d'être rapprochées pour pouvoir se loger dans la cavité de réception 594. De la même façon, la languette 400 et le bouton poussoir 403 du troisième adaptateur 29 sont enfoncés vers le logement interne 293 de l'adaptateur de base 25. La translation longitudinale de ce dispositif de connexion 1 est bloquée lorsque le bouton poussoir 403 atteint un orifice 595 percé dans la paroi longitudinale 591, cet orifice 595 étant apte à le recevoir. La coopération des oreilles 302 du troisième adaptateur 29 avec les ouïes 593, participe à bloquer tout mouvement vertical entre le troisième adaptateur 29 et la chape 590.

La présente invention propose ainsi un dispositif de connexion entre un balai d'essuyage et un bras d'entraînement, comportant un adaptateur de base et au moins un adaptateur complémentaire. L'adaptateur de base présente une référence et l'adaptateur complémentaire un marquage, par exemple visuels, dont la combinaison forme un code, un utilisateur lisant ce code pouvant ensuite l'associer à un bras d'entraînement correspondant. Un tel dispositif de connexion permet à l'utilisateur de vérifier que l'assemblage entre balai d'essuyage et bras d'entraînement est conforme. Cette vérification est fiabilisée car une référence ou un marquage non utilisé est caché par une partie de l'adaptateur qui la recouvre, réduisant ainsi le risque d'erreur.

## Revendications

1. Dispositif de connexion (1) entre un balai d'essuyage (12) et un bras d'entraînement (56, 57, 59, 65) pour véhicule, comprenant au moins un connecteur (24) configuré pour être rendu solidaire du balai d'essuyage (12), **caractérisé en ce que** ce dispositif de connexion (1) comprend :
des adaptateurs (25, 26, 27, 29), chacun des adaptateurs présentant au moins une référence (258) ou au moins un marquage (268, 278, 298) visuels, la combinaison des références et marquages des adaptateurs formant un code, et
les références (258) et marquages (268, 278, 298) étant disposés sur une face des adaptateurs (25, 26, 27, 29) qui est visible par l'utilisateur lorsqu'il utilise le dispositif de connexion (1), et
les références (258) ou les marquages (268, 278, 298) étant des lettres ou des chiffres, et
dans lequel les adaptateurs (25, 26, 27, 29) comprennent :
un adaptateur de base (25), et
au moins un adaptateur complémentaire (26, 27, 29), et
cet adaptateur de base (25) étant équipé d'au moins un organe de pivotement (50) le reliant au connecteur (24), l'adaptateur de base (25) étant configuré pour relier ce connecteur (24) à un premier type de bras d'entraînement, l'adaptateur de base (25) étant porteur d'au moins une référence (258) destinée à associer l'adaptateur de base (25) à ce premier type de bras d'entraînement, et
la combinaison de l'adaptateur de base (25) et de l'adaptateur complémentaire (26, 27, 29) générant le code visuellement associé à un autre type de bras d'entraînement (56, 57, 59, 65), différent du premier type de bras d'entraînement, à partir d'une combinaison de la référence (258) et du marquage (268, 278, 298), et
dans lequel l'au moins adaptateur complémentaire (26, 27, 29) est porteur d'au moins un marquage (268, 278, 298), et
l'au moins un adaptateur complémentaire (26, 27, 29) comprend un premier adaptateur (26) qui présente au moins une cavité (266), cette cavité (266) comprenant une paroi de fond (267), le marquage (268) du premier adaptateur (26) étant disposé sur cette paroi de fond (267), la combinaison du marquage (268) du premier adaptateur (26) avec la référence (258) de l'adaptateur de base (25) formant un code visuellement associé à un deuxième type de bras d'entraînement (65).

2. Dispositif de connexion (1) selon la revendication précédente, comprenant au moins une butée et un organe de verrouillage destinés à solidariser au moins l'un des adaptateurs (25, 26, 27, 29) par rapport au type de bras d'entraînement (56, 57, 59, 65) auquel il est destiné à s'associer.

3. Dispositif de connexion (1) selon la revendication précédente, dans lequel l'organe de verrouillage est disposé sur une paroi supérieure (250, 260, 270, 290) de l'adaptateur (25, 26, 27, 29).

4. Dispositif de connexion (1) selon l'une quelconque des revendications précédentes, dans lequel l'au moins un adaptateur complémentaire (26, 27, 29) comprend un deuxième adaptateur (27) qui présente au moins une excroissance (277), le marquage (278) du deuxième adaptateur (27) étant disposé sur cette excroissance (277), la combinaison du marquage (278) du deuxième adaptateur (27) avec la référence (258) de l'adaptateur de base (25) formant un code visuellement associé à un troisième type de bras d'entraînement (57).

5. Dispositif de connexion (1) selon la revendication 4, dans lequel l'excroissance (277) du deuxième adaptateur (27) vient se loger dans la cavité (266) du premier adaptateur (26), le marquage (278) du deuxième adaptateur (27) étant au moins en partie superposé sur le marquage (268) du premier adaptateur (26), la combinaison du marquage (268) du premier adaptateur (26), du marquage (278) du deuxième adaptateur (27) et de la référence (258) de l'adaptateur de base (25) formant un code visuellement associé à un quatrième type de bras d'entraînement (56).

6. Dispositif de connexion (1) selon l'une quelconque des revendications précédentes, dans lequel l'au moins un adaptateur complémentaire (26, 27, 29) comprend un troisième adaptateur (29), ce troisième adaptateur (29) comportant au moins un marquage (298), la combinaison du marquage (298) du troisième adaptateur (29) avec la référence (258) de l'adaptateur de base (25) formant un code étant destiné à associer visuellement ce troisième adaptateur (29) à un cinquième type de bras d'entraînement (59).

7. Dispositif de connexion (1) selon l'une quelconque des revendications précédentes, dans lequel au moins deux adaptateurs (25, 26, 27, 29) s'imbriquent l'un dans l'autre.

8. Balai d'essuyage (12) comprenant un dispositif de connexion (1) selon l'une quelconque des revendications précédentes.

9. Système d'essuyage comprenant un bras d'entraînement (56, 57, 59, 65) porteur d'un balai d'essuyage (12) selon la revendication précédente, le balai d'essuyage (12) étant relié au bras d'entraînement (56, 57, 59, 65) par l'intermédiaire du dispositif de connexion (1).

## Patentansprüche

1. Verbindungsvorrichtung (1) zwischen einem Wischblatt (12) und einem Antriebsarm (56, 57, 59, 65) für ein Fahrzeug, umfassend mindestens einen Verbinder (24), der dazu konfiguriert ist, mit dem Wischblatt (12) fest verbunden zu werden, **dadurch gekennzeichnet, dass** diese Verbindungsvorrichtung (1) umfasst:
Adapter (25, 26, 27, 29), wobei jeder der Adapter mindestens eine visuelle Referenz (258) oder mindestens eine visuelle Markierung (268, 278, 298) aufweist, wobei die Kombination der Referenzen und Markierungen der Adapter einen Code bildet, und
die Referenzen (258) und Markierungen (268, 278, 298) auf einer Seite der Adapter (25, 26, 27, 29) angeordnet sind, die für den Benutzer sichtbar ist, wenn er die Verbindungsvorrichtung (1) verwendet, und
die Referenzen (258) oder die Markierungen (268, 278, 298) Buchstaben oder Ziffern sind, und
wobei die Adapter (25, 26, 27, 29) umfassen:
einen Basisadapter (25), und
mindestens einen Ergänzungsadapter (26, 27, 29), und dieser Basisadapter (25) mit mindestens einem Schwenkorgan (50) ausgestattet ist, das ihn mit dem Verbinder (24) verbindet, wobei der Basisadapter (25) dazu konfiguriert ist, diesen Verbinder (24) mit einem ersten Typ von Antriebsarm zu verbinden, wobei der Basisadapter (25) mindestens eine Referenz (258) trägt, die dazu bestimmt ist, den Basisadapter (25) mit diesem ersten Typ von Antriebsarm zu verknüpfen, und
die Kombination des Basisadapters (25) und des Ergänzungsadapters (26, 27, 29) den Code erzeugt, der visuell einem anderen Typ von Antriebsarm (56, 57, 59, 65) zugeordnet ist, der sich vom ersten Typ von Antriebsarm unterscheidet, ausgehend von einer Kombination der Referenz (258) und der Markierung (268, 278, 298), und
wobei der mindestens eine Ergänzungsadapter (26, 27, 29) mindestens eine Markierung (268, 278, 298) trägt, und
der mindestens eine Ergänzungsadapter (26, 27, 29) einen ersten Adapter (26) umfasst, der mindestens einen Hohlraum (266) aufweist, wobei dieser Hohlraum (266) eine Bodenwand (267) umfasst, wobei die Markierung (268) des ersten Adapters (26) auf dieser Bodenwand (267) angeordnet ist, wobei die Kombination der Markierung (268) des ersten Adapters (26) mit der Referenz (258) des Basisadapters (25) einen Code bildet, der visuell einem zweiten Typ von Antriebsarm (65) zugeordnet ist.

2. Verbindungsvorrichtung (1) nach dem vorhergehenden Anspruch, umfassend mindestens einen Anschlag und ein Verriegelungsorgan, die dazu bestimmt sind, mindestens einen der Adapter (25, 26, 27, 29) gegenüber dem Typ von Antriebsarm (56, 57, 59, 65), mit dem er verbunden werden soll, fest zu verbinden.

3. Verbindungsvorrichtung (1) nach dem vorhergehenden Anspruch, wobei das Verriegelungsorgan auf einer oberen Wand (250, 260, 270, 290) des Adapters (25, 26, 27, 29) angeordnet ist.

4. Verbindungsvorrichtung (1) nach einem der vorhergehenden Ansprüche, wobei der mindestens eine Ergänzungsadapter (26, 27, 29) einen zweiten Adapter (27) umfasst, der mindestens einen Vorsprung (277) aufweist, wobei die Markierung (278) des zweiten Adapters (27) auf diesem Vorsprung (277) angeordnet ist, wobei die Kombination der Markierung (278) des zweiten Adapters (27) mit der Referenz (258) des Basisadapters (25) einen Code bildet, der visuell einem dritten Typ von Antriebsarm (57) zugeordnet ist.

5. Verbindungsvorrichtung (1) nach Anspruch 4, wobei der Vorsprung (277) des zweiten Adapters (27) in den Hohlraum (266) des ersten Adapters (26) eingesetzt wird, wobei die Markierung (278) des zweiten Adapters (27) zumindest teilweise über der Markierung (268) des ersten Adapters (26) liegt, wobei die Kombination der Markierung (268) des ersten Adapters (26), der Markierung (278) des zweiten Adapters (27) und der Referenz (258) des Basisadapters (25) einen Code bildet, der visuell einem vierten Typ von Antriebsarm (56) zugeordnet ist.

6. Verbindungsvorrichtung (1) nach einem der vorhergehenden Ansprüche, wobei der mindestens eine Ergänzungsadapter (26, 27, 29) einen dritten Adapter (29) umfasst, wobei dieser dritte Adapter (29) mindestens eine Markierung (298) aufweist, wobei die Kombination der Markierung (298) des dritten Adapters (29) mit der Referenz (258) des Basisadapters (25) einen Code bildet, der dazu bestimmt ist, diesen dritten Adapter (29) visuell einem fünften Typ von Antriebsarm (59) zuzuordnen.

7. Verbindungsvorrichtung (1) nach einem der vorhergehenden Ansprüche, wobei mindestens zwei Adapter (25, 26, 27, 29) ineinandergreifen.

8. Wischblatt (12), umfassend eine Verbindungsvorrichtung (1) nach einem der vorhergehenden Ansprüche.

9. Wischsystem, umfassend einen Antriebsarm (56, 57, 59, 65), der ein Wischblatt (12) nach dem vorhergehenden Anspruch trägt, wobei das Wischblatt (12) über die Verbindungsvorrichtung (1) mit dem Antriebsarm (56, 57, 59, 65) verbunden ist.

## Claims

1. Connection device (1) for connecting a wiper blade (12) to a driving arm (56, 57, 59, 65) for a vehicle, comprising at least one connector (24) configured to be secured to the wiper blade (12), the connection device (1) comprising:
adapters (25, 26, 27, 29), each of the adapters presenting at least one visual reference (258) or at least one visual marking (268, 278, 298), the combination of the references and markings of the adapters forming a code, and
the references (258) and markings (268, 278, 298) being arranged on a face of the adapters (25, 26, 27, 29) that is visible to the user when using the connection device (1), and
the references (258) or markings (268, 278, 298) being letters or numbers, and wherein the adapters (25, 26, 27, 29) comprise:
a base adapter (25) and
at least one complementing adapter (26, 27, 29), this base adapter (25) being equipped with at least one pivot member (50) connecting it to the connector (24), the base adapter (25) being configured to connect this connector (24) to a first type of driving arm, the base adapter (25) bearing at least one reference (258) designed to associate the base adapter (25) with this first type of driving arm, and
the combination of the base adapter (25) and the complementing adapter (26, 27, 29) generating a code visually associated with another type of driving arm (56, 57, 59, 65), different from the first type of driving arm, from a combination of the reference (258) and the marking (268, 278, 298) and
wherein the at least one complementary adapter (26, 27, 29) carries at least one marking (268, 278, 298), and
the at least one complementary adapter (26, 27, 29) comprises a first adapter (26) which presents at least one cavity (266), this cavity (266) comprising a bottom wall (267), the marking (268) of the first adapter (26) being arranged on this bottom wall (267), the combination of the marking (268) of the first adapter (26) with the reference (258) of the base adapter (25) forming a code visually associated with a second type of drive arm (65).

2. Connection device (1) according to the preceding claim, comprising at least one stop and one locking member that are intended to secure at least one of the adapters (25, 26, 27, 29) relative to the type of driving arm (56, 57, 59, 65) with which it is intended to be associated.

3. Connection device (1) according to the preceding claim, wherein the locking member is positioned on an upper wall (250, 260, 270, 290) of the adapter (25, 26, 27, 29).

4. Connection device (1) according to the preceding claim, wherein the at least one complementing adapter (26, 27, 29) comprises a second adapter (27) which has at least one protrusion (277), the marking (278) of the second adapter (27) being positioned on this protrusion (277), the combination of the marking (278) of the second adapter (27) with the reference (258) of the base adapter (25) forming a code visually associated with a third type of driving arm (57).

5. Connection device (1) according to claim 4, wherein the protrusion (277) of the second adapter (27) comes housed in the cavity (266) in the first adapter (26), the marking (278) of the second adapter (27) being at least partially superposed on the marking (268) of the first adapter (26), the combination of the marking (268) of the first adapter (26), the marking (278) of the second adapter (27) and the reference (258) of the base adapter (25) forming a code visually associated with a fourth type of driving arm (56).

6. Connection device (1) according to any one of the preceding claims, wherein the at least one complementing adapter (26, 27, 29) comprises a third adapter (29), this third adapter (29) having at least one marking (298), the combination of the marking (298) of the third adapter (29) with the reference (258) of the base adapter (25) forming a code being designed to visually associate this third adapter (29) with a fifth type of driving arm (59).

7. Connection device (1) according to any one of the preceding claims, wherein at least two adapters (25, 26, 27, 29) fit one inside the other.

8. Wiper blade (12) comprising a connection device (1) according to any one of the preceding claims.

9. Wiper system comprising a driving arm (56, 57, 59, 65) bearing a wiper blade (12) according to the preceding claim, the wiper blade (12) being connected to the driving arm (56, 57, 59, 65) by means of the connection device (1).
